# EUROPEAN PATENT APPLICATION

(11) **EP 4 342 636 A1**
(43) Date of publication of application: **27.03.2024**
(21) Application number: 23196862.9
(22) Date of filing: 12.09.2023
(51) Int. Cl.: B25D 1/12, B26B 23/00, A61B 17/92, A61C 3/08, B25D 1/06

(54) **FORCE-LIMITING AND DAMPING DEVICE**

(30) Priority: 19.09.2022 TW 111135405
(71) Applicant: Shih, Jui-Yuan, Lukang Township, Changhua County (TW)
(72) Inventor: Shih, Jui-Yuan, Lukang Township, Changhua County (TW)
(74) Representative: Cabinet Chaillot

(57) **Abstract**

A force-limiting and damping device has a body (10), a tapping element (20, 20C, 20D, 20E, 201), an elastic element (30, 30F, 301, 30J), and a reinforcing element (40, 40A, 40B, 40F, 40I). The body (10) has a connecting segment (11, 11E, 11F). The tapping element (20, 20C, 20D, 20E, 20I) is movably connected to the body (10) and has a mounting segment (21, 21F, 21I), a tapping segment (22, 22I), a fixing segment (23), and a protrusion segment (24, 24I). The protrusion segment (24, 24I) is formed between the mounting segment (21, 21F, 21I) and the tapping segment (22, 22I). The reinforcing element (40, 40A, 40B, 40F, 40I) is mounted on the tapping element (20, 20C, 20D, 20E, 201) between the elastic element (30, 30F, 30I, 30J) and the tapping segment (22, 22I) and abuts against the protrusion segment (24, 24I).

## Description

### 1. Field of the Invention

The present invention relates to a force-limiting and damping device, and more particularly to a force-limiting and damping device that may improve structural strength, may prolong service life, and may avoid deflection during a tapping process.

### 2. Description of Related Art

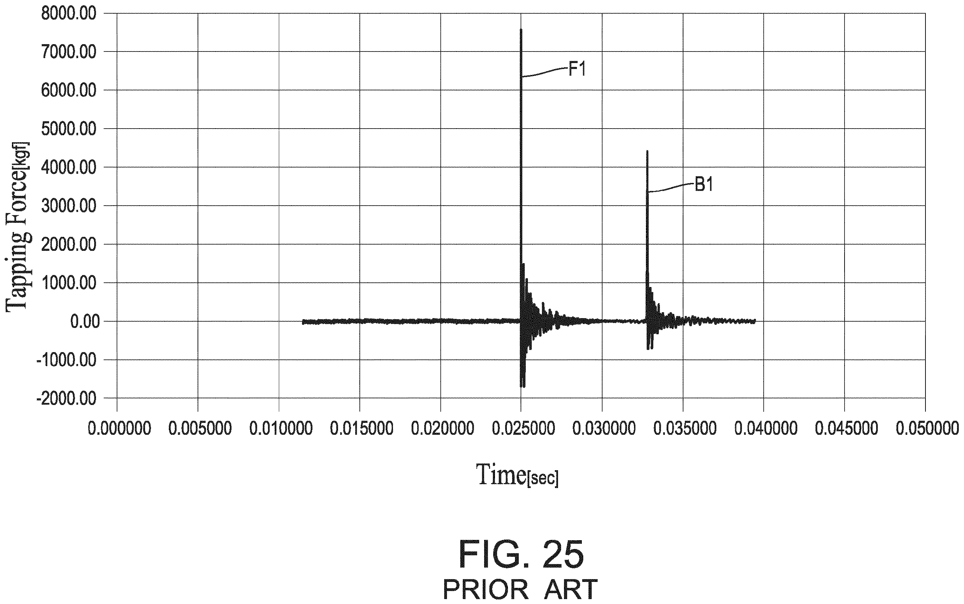

A conventional hammer or mallet in the industry is used to tap nails in wood, cement walls or metal plates. Due to a single-piece design of a head of the conventional industrial hammer or mallet, during the tapping process, the conventional industrial hammer or mallet may be bounced by a reaction force, and this will shorten the contacting time of the conventional industrial hammer or mallet with the nails, and will tend to make the nails bent or deflect. Furthermore, the instant rebound reaction force will be converted into heat and noise as energy dissipation, and this will reduce the tapping efficiency of the user. That is, the applied force that is provided by the user is not tapped on the nails sufficiently, and the user needs to tap the nails repeatedly to enable the nails to knock and fix in wooden plates or walls, and this will increase the number and time of tapping the nails. In addition, when the user holds a handle of the conventional industrial hammer or mallet, the vibration generated during the bouncing process also makes the user feel uncomfortable. With reference to Fig. 25, when a conventional industrial hammer without shock absorption is put on a percussion test machine to tap a strength gauge, a graph of relationship between tapping force (Kgf) and time (sec) is measured and recorded by the percussion test machine. In the graph of Fig. 25, in a single tapping process of the conventional industrial hammer, as a rigid body, the conventional industrial hammer only has an impact force F1 (a first wave force as shown in Fig. 25), and the impact force F1 is quite large, so it is easy to bounce and make the user's hand feel uncomfortable or injured due to the reaction force. Furthermore, in Fig. 25, a tapping force B1 (a second wave force as shown in Fig. 25) is tested by the percussion test machine after the impact force F1, the tapping force B1 is generated by the continuous downward inertial force of the percussion test machine driving the conventional industrial hammer to move downward during the single tapping process of the conventional industrial hammer, and is not generated by the conventional industrial hammer. Therefore, in use, when a user holds and taps the conventional industrial hammer, there is no tapping force B1 as measured on the percussion test machine.

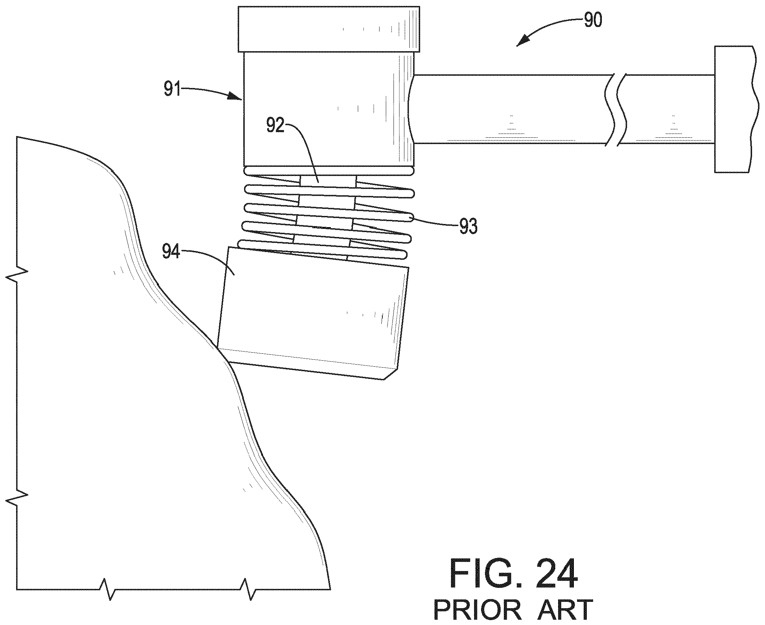

In view of this, in order to avoid the above-mentioned problems caused by the single-piece design of the head of the conventional industrial hammer or mallet in the tapping process, a conventional industrial mallet or hammer 90, as shown in Fig. 24, has an elastic element 93 mounted around a rod 92 at a middle of a head 91. The elastic element 93 may provide a shock-absorbing effect to the conventional industrial hammer 90. However, during a tapping process of the conventional industrial hammer 90, when tapping an object with a greater force, a reaction force of the object is applied to the conventional industrial hammer 90, and an elastic force of the elastic member 93 will make a bottom of the head 91 deflected. Then a connecting surface 94 between the head 91 and the rod 92 needs to bear the torque formed by the stress from the deflection of the head 91. After a long time of use, the connecting surface 94 is easy to be damaged, and this may influence the service life of the conventional industrial hammer 90. In addition, an inner diameter of the elastic element 93 of the conventional industrial hammer 90 is larger than an outer diameter of the rod 92, such that an inner surface of the elastic element 93 is not in contact with an outer surface of the rod 92. During a tapping process, the elastic element 93 is easy to move relative to the rod 92 due to an uneven lateral compression, causing the bottom of the head 91 to be deflected, resulting in fracture or damage to the connecting surface 94, and failing to provide a guiding and supporting effect to the rod 92.

To overcome the shortcomings, the present invention tends to provide a force-limiting and damping device to mitigate the aforementioned problems.

The main objective of the invention is to provide a force-limiting and damping device that may improve structural strength, may prolong service life, and may avoid deflection during a tapping process.

A force-limiting and damping device in accordance with the present invention has a body, a tapping element, an elastic element, and a reinforcing element. The body has a connecting segment with a mounting hole. The tapping element is movably connected to the body and has a mounting segment, a tapping segment, a fixing segment, and a protrusion segment. The protrusion segment is formed on a connecting portion between the mounting segment and the tapping segment. The reinforcing element is mounted on the tapping element between the elastic element and the tapping segment of the tapping element and abuts against the protrusion segment. The force-limiting and damping device can improve structural strength, can prolong service life, and can avoid deflection during a tapping process.

Other objects, advantages and novel features of the invention will become more apparent from the following detailed description when taken in conjunction with the accompanying drawings.

### IN THE DRAWINGS:

Fig. 1 is a perspective view of a first embodiment of a force-limiting and damping device in accordance with the present invention;
Fig. 2 is an exploded perspective view of the force-limiting and damping device in Fig. 1;
Fig. 3 is an enlarged cross sectional side view of the force-limiting and damping device in Fig. 1;
Figs. 4 to 6 are enlarged and operational side views in partial sections of the force-limiting and damping device in Fig. 1;
Fig. 7 is an enlarged cross sectional side view of a second embodiment of a force-limiting and damping device in accordance with the present invention;
Fig. 8 is an enlarged cross sectional side view of a third embodiment of a force-limiting and damping device in accordance with the present invention;
Fig. 9 is an enlarged cross sectional side view of a fourth embodiment of a force-limiting and damping device in accordance with the present invention;
Fig. 10 is an enlarged side view in partial section of a fifth embodiment of a force-limiting and damping device in accordance with the present invention;
Fig. 11 is an enlarged side view in partial section of a sixth embodiment of a force-limiting and damping device in accordance with the present invention;
Fig. 12 is a perspective view of a seventh embodiment of a force-limiting and damping device in accordance with the present invention;
Fig. 13 is an exploded perspective view of the force-limiting and damping device in Fig. 12;
Fig. 14 is another exploded perspective view of the force-limiting and damping device in Fig. 12;
Fig. 15 is an enlarged side view of the force-limiting and damping device in Fig. 12;
Fig. 16 is an enlarged cross sectional side view of the force-limiting and damping device in Fig. 12;
Fig. 17 is a side view of an eighth embodiment of a force-limiting and damping device in accordance with the present invention;
Fig. 18 is a side view of a ninth embodiment of a force-limiting and damping device in accordance with the present invention;
Fig. 19 is an operational side view of the force-limiting and damping device in Fig. 18;
Fig. 20 is an enlarged and exploded perspective view of a tenth embodiment of a force-limiting and damping device in accordance with the present invention;
Fig. 21 is an enlarged cross sectional side view of the force-limiting and damping device in Fig. 20;
Fig. 22 is an enlarged and exploded perspective view of an eleventh embodiment of a force-limiting and damping device in accordance with the present invention;
Fig. 23 is a graph between force and time of the first embodiment of the force-limiting and damping device in Fig. 1;
Fig. 24 is an operational side view of an industrial hammer with an elastic element in accordance with the prior art; and
Fig. 25 is graph between force and time of an industrial hammer without shock absorption in accordance with the prior art.

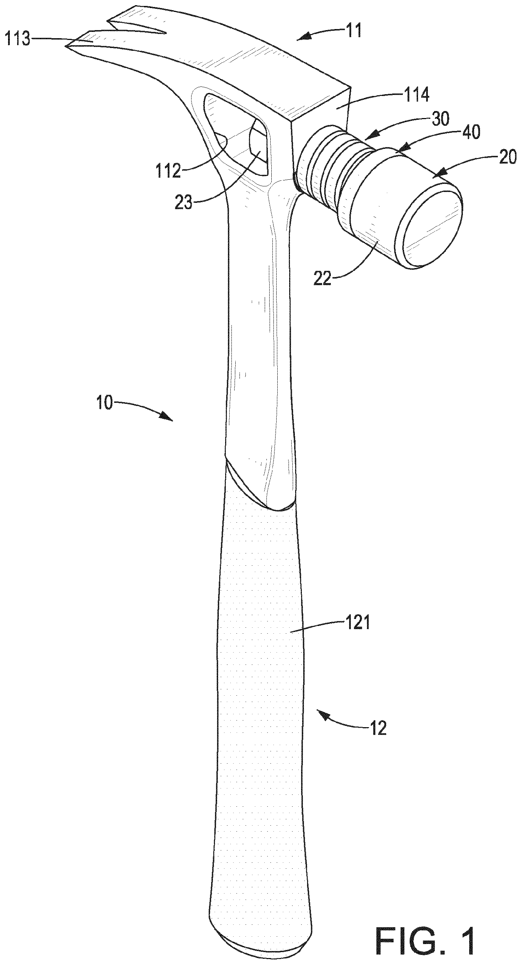

With reference to Figs. 1 to 3, a first embodiment of a force-limiting and damping device in accordance with the present invention comprises a body 10, a tapping element 20, an elastic element 30, and a reinforcing element 40.

The body 10 may be an elongated metal shaft, and has a front end, a rear end, a connecting segment 11, and a holding segment 12. The connecting segment 11 is formed on and protrudes from the front end of the body 10, and has a top side, a bottom side, two opposite sides, a mounting hole 111, a receiving space 112, a claw 113, and an abutting face 114. The mounting hole 111 is axially formed through the bottom side of the connecting segment 11. The receiving space 112 is formed through the two opposite sides of the connecting segment 11 and communicates with the mounting hole 111. The claw 113 is formed on and protrudes from the top side of the connecting segment 11. The abutting face 114 is formed on the bottom side of the connecting segment 11.

The holding segment 12 is formed on the rear end of the body 10, is opposite the connecting segment 11, and has an external surface and a shock-absorbing element 121. The shock-absorbing element 121 is disposed on the external surface of the holding segment 12, may be a sleeve made of silicone rubber, rubber or thermoplastic rubber material, and can provide a shock-absorbing effect to a user when holding the body 10 to tap.

The tapping element 20 is movably connected to the body 10 relative to the connecting segment 11, and has a mounting segment 21, a tapping segment 22, a fixing segment 23, and a protrusion segment 24. The mounting segment 21 is movably connected to the connecting segment 11 of the body 10. Furthermore, the mounting segment 21 is a rod that extends through the mounting hole 111 of the connecting segment 11 and extends in the receiving space 112. Additionally, the mounting segment 21 has a cross section corresponding to a cross section of the mounting hole 111. When the cross section of the mounting segment 21 is round, the mounting segment 21 may be rotated relative to the connecting segment 11. Furthermore, when the cross section of the mounting segment 21 is polygonal, the mounting segment 21 only can move relative to the connecting segment 11 without rotating. The mounting segment 21 has an external surface, a holding end, a forming end, and a locking structure 211. The holding end of the mounting segment 21 extends in the receiving space 112 of the connecting segment 11 via the mounting hole 111. The forming end of the mounting segment 21 extends out of the bottom side of the connecting segment 11 via the mounting hole 111. The locking structure 211 may be an outer screw, and is disposed on the external surface of the mounting segment 21 adjacent to the holding end of the mounting segment 21.

The tapping segment 22 is disposed on the forming end of the mounting segment 21, is opposite the locking structure 211, and is mounted below the connecting segment 11. Additionally, the tapping segment 22 is integrally formed with the mounting segment 21, and may be made of metal, polyethylene (PE), hard material such as plastic, or elastic materials such as rubber, silicone or wood. Furthermore, the tapping segment 22 may be made of magnetic metal to enable the tapping segment 22 to attract a nail in use. The tapping segment 22 may be a spheroid or may be flat, axe-like, curved or tapered.

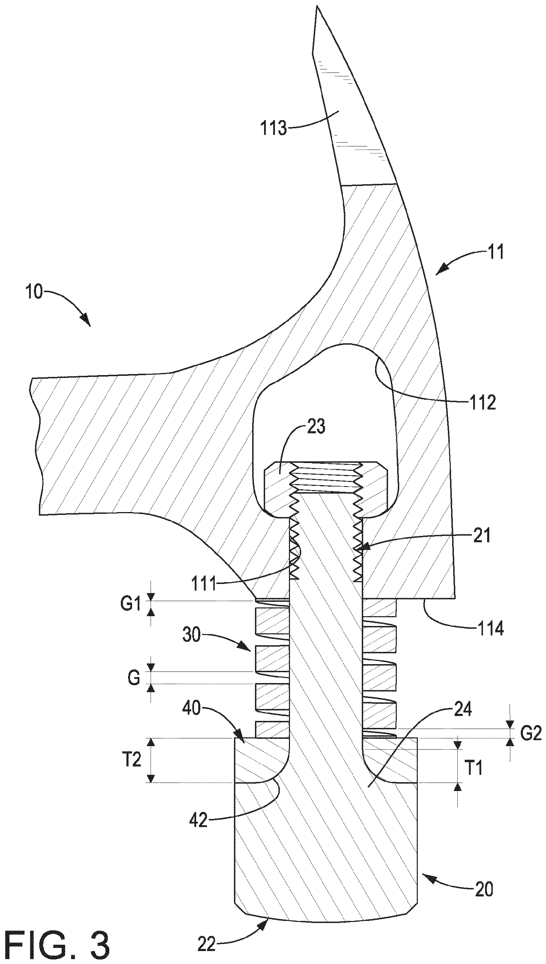

The fixing segment 23 is disposed in the receiving space 112, is connected to the mounting segment 21, and abuts the connecting segment 11 of the body 10 to hold the tapping segment 22 below the connecting segment 11. The structural relationship between the fixing segment 23 and the mounting segment 21 is an adjustable structure. Furthermore, the fixing segment 23 is a screw bolt and is screwed with the locking structure 211 of the mounting segment 21. With reference to Fig. 3, a connecting position between the fixing segment 23 and the mounting segment 21 can be adjusted, so as to change a distance between the tapping segment 22 and the connecting segment 11.

The protrusion segment 24 may be formed with the mounting segment 21 and the tapping segment 22 as a single piece, may be an annular structure or multiple protruding structures annularly arranged at spaced intervals, is disposed between the mounting segment 21 and the tapping segment 22 and has a thickness T1. Furthermore, the protrusion segment 24 has a curved surface facing the connecting segment 11.

The elastic element 30 is mounted on the mounting segment 21 of the tapping element 20 between the connecting segment 11 of the body 10 and the tapping segment 22 of the tapping element 20, is used to remind a user whether the tapping force exceeds the set force range of the force-limiting and damping device when tapping, and has a top end and a bottom end. The top end of the elastic element 30 abuts against the abutting face 114 of the connecting segment 11, and the bottom end of the elastic element 30 extends toward the protrusion segment 24 of the tapping element 20. Furthermore, the elastic element 30 has an inner diameter matched with an outer diameter of the mounting segment 21, and this enables the elastic element 30 to contact the mounting segment 21. Then the elastic element 30 can provide a guiding and supporting effect to the mounting segment 21 in a tapping process of the force-limiting and damping device. Additionally, the elastic element 30 may be made of a flexible material in a fixed shape such as a spring, rubber, silicone, a metal washer, a flexible metal block or a flexible block. In use, when a tapping force is smaller than a preset compression force of the elastic element 30, a user may feel the tapping segment 22 generating an instant rebound, and when the tapping force is larger than the preset compression force of the elastic element 30, the user may feel the tapping segment 22 generating a delayed rebound. Therefore, the user can be reminded of the tapping force by identifying the compressed extent, and this may provide a force-limiting reminder effect to the user.

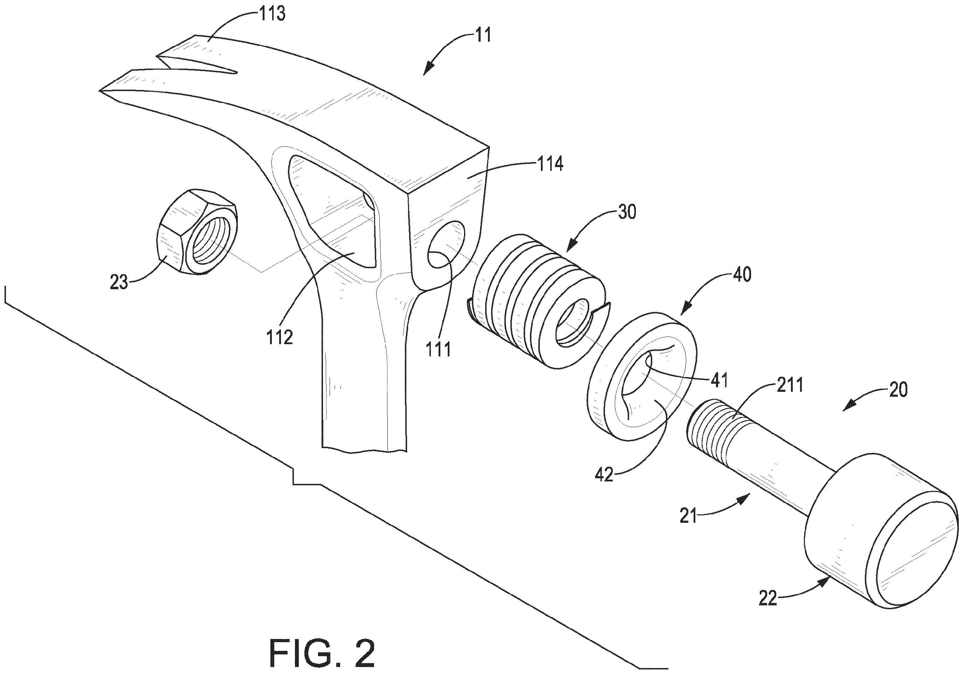

With reference to Figs. 2 and 3, the reinforcing element 40 is disposed on the tapping element 20 between the elastic element 30 and the tapping segment 22 of the tapping element 20, abuts against the protrusion segment 24, and has a thickness T2. The thickness T2 of the reinforcing element 40 is larger than the thickness T1 of the protrusion segment 24 (i.e. T2>T1), and the protrusion segment 24 cannot abut against the elastic element 30. The reinforcing element 40 has a top side, a bottom side, a through hole 41, and a contacting face 42. The through hole 41 is formed through the top side and the bottom side of the reinforcing element 40, and the reinforcing element 40 is mounted on the mounting segment 21 of the tapping element 20 via the through hole 41. The top side of the reinforcing element 40 abuts against the bottom end of the elastic element 30. The bottom side of the reinforcing element 40 faces the tapping segment 22, and the contacting face 42 is formed on the bottom side of the reinforcing element 40 and is in full or partial contact with the curved surface of the protrusion segment 24.

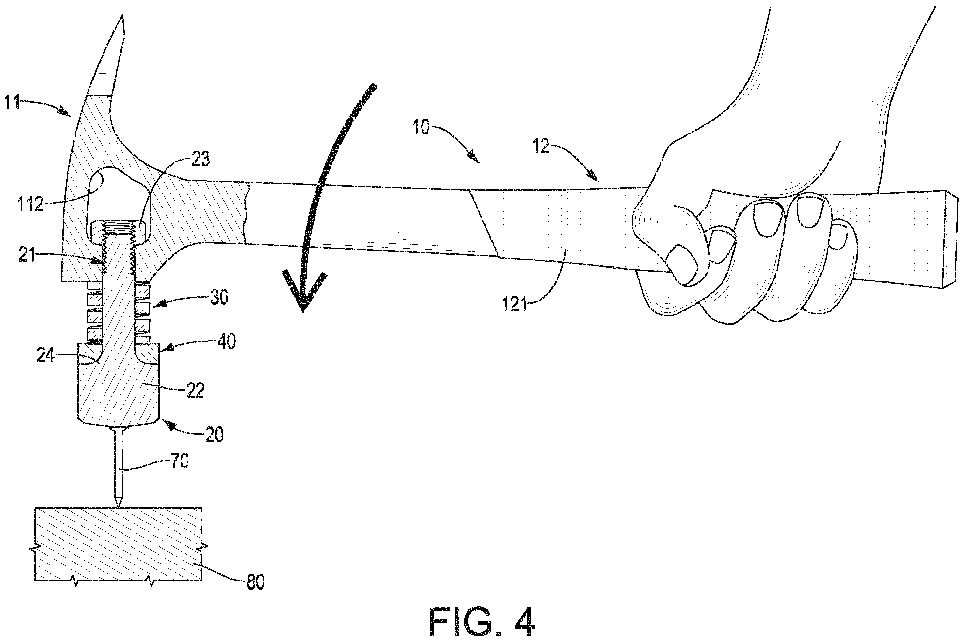

According to the above-mentioned structural relationship and features of the first embodiment of a force-limiting and damping device in accordance with the present invention, with reference to Figs. 1 and 4, the user holds and moves the holding segment 12 of the body 10 to enable the tapping segment 22 of the tapping element 20 to hit against a nail 70, and a reaction force is generated when the tapping segment 22 knocks against the nail 70. When the reaction force is smaller than the preset compression force of the elastic element 30, the fixing segment 23 will not be separated from the connecting segment 11 along with the mounting segment 21, the elastic element 30 is not compressed between the connecting segment 11 and the reinforcing element 40, and the tapping segment 22 will not move relative to the connecting segment 11, and the tapping segment 22 will receive an instant rebound reaction force.

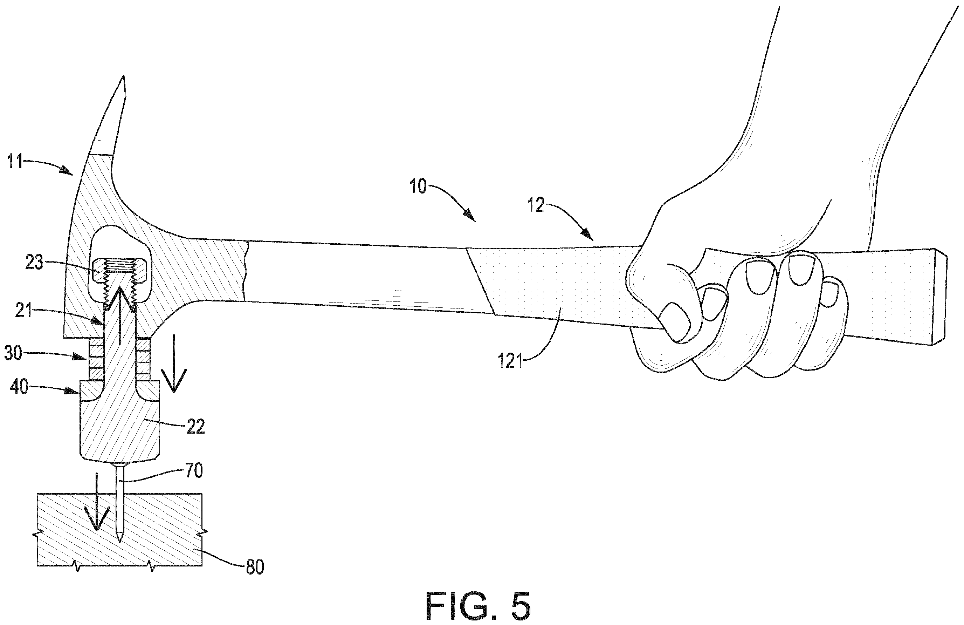

Furthermore, with reference to Fig. 5, when the user applies a larger force to tap the nail 70, the reaction force is larger than the preset compression force of the elastic element 30, the tapping element 20 will move upwardly relative to the connecting segment 11 to separate the fixing segment 23 from the connecting segment 11 along with the mounting segment 21 and to compress the elastic element 30. Then, the tapping energy is transformed into the compressed potential energy of the elastic element 30. The body 10 will be moved toward the nail 70 with the waving direction of the user (not going to rebound). By the way of mounting the elastic element 30 between the connecting segment 11 and the reinforcing element 40, a delayed rebound and damping effect is generated to the reaction force to prevent the force-limiting and damping device from bouncing during the tapping process by an instant rebound reaction force. Then, the nail 70 will not bend or deflect easily, and the user's applied force is continuously transferred to the nail 70, and this may reduce noise and the loss of energy to improve the work efficiency. Furthermore, the user may only need to tap the nail 70 into a wooden board 80 several times, and this may reduce the number and time of tapping the nail into the wooden board 80. Furthermore, the elastic element 30 can provide not only damping and shock-absorbing effects, but also a force-applying reminder effect. Additionally, with reference to Fig. 2, the user may rotate the fixing segment 23 to separate from the mounting segment 21, and mount the elastic element 30 with different elastic forces between the connecting segment 11 and the tapping segment 22. Further, with reference to Fig. 3, the distance between the connecting segment 11 and the tapping segment 22 is adjusted by rotating the fixing segment 23 to compress the elastic element 30 under different compression statuses, and this may enable the elastic element 30 to have different elastic tensions.

Furthermore, with reference to Fig. 3, the stress and torque of the elastic element 30 applied to the tapping element 20 and concentrated on a connecting portion between the mounting segment 21 and the tapping segment 22 during a tapping process can be absorbed and dispersed via the abutment between the reinforcing element 40 and the protrusion segment 24, and this can avoid breaking or damaging the connecting portion between the mounting segment 21 and the tapping segment 22 after long-term use. In addition, the elastic element 30 can provide a guiding and supporting effect to the mounting segment 21 via the structural relationship that the inner diameter of the elastic element 30 matches the outer diameter of the mounting segment 21, and this can avoid a deflection phenomenon in the tapping process to influence the tapping element 20. Additionally, since the thickness T2 of the reinforcing element 40 is larger than the thickness T1 of the protrusion segment 24, the elastic force generated by the elastic element 30 during the tapping process is transmitted to the protrusion segment 24 via the reinforcing element 40.

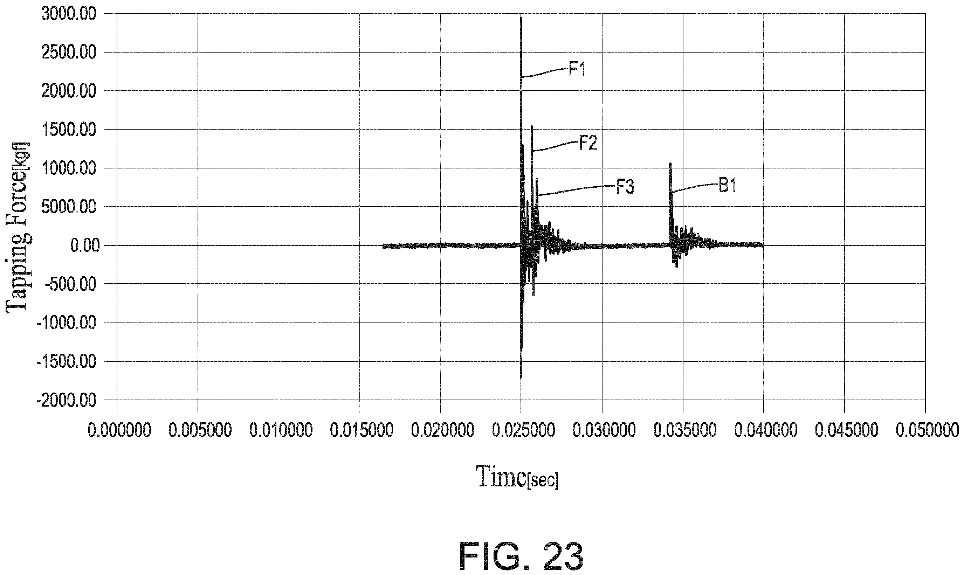

With reference to Figs. 4 to 6, and 23, the graph relationship between tapping force (Kgf) and time (sec) is measured and recorded by the percussion test machine for the first embodiment of the force-limiting and damping device of the present invention. When the nail 70 is being tapped into the wooden board 80 by holding and moving the holding segment 12 of the body 10 to enable the tapping segment 22 of the tapping element 20 to hit against the nail 70, a reaction force is generated when the tapping segment 22 knocks against the nail 70 as shown in Fig. 4. When the reaction force is smaller than the preset compression force of the elastic element 30, the fixing segment 23 will not be separated from the connecting segment 11 along with the mounting segment 21, the elastic element 30 is not compressed between the connecting segment 11 and the reinforcing element 40, and the tapping segment 22 will not move relative to the connecting segment 11, and the tapping segment 22 will receive an instant rebound reaction force. At this time, the force-limiting and damping device applies an impact force F1 to the nail 70 (a first wave force as shown in Fig. 23). With reference to Fig. 5, when the user applies a larger force to tap the nail 70, the reaction force is larger than the preset compression force of the elastic element 30, the tapping element 20 will move upwardly relative to the connecting segment 11 to separate the fixing segment 23 from the connecting segment 11 along with the mounting segment 21 and to compress the elastic element 30. The tapping energy is transformed into the compressed potential energy of the elastic element 30. At this time, the force-limiting and damping device is converted into a rigid body by the compression deformation of the elastic element 30, and then applies a strain force F2 (a second wave force F2 as shown in Fig. 23) to the nail 70. The second wave force (strain force F2) is about half of the first wave force (impact force F1).

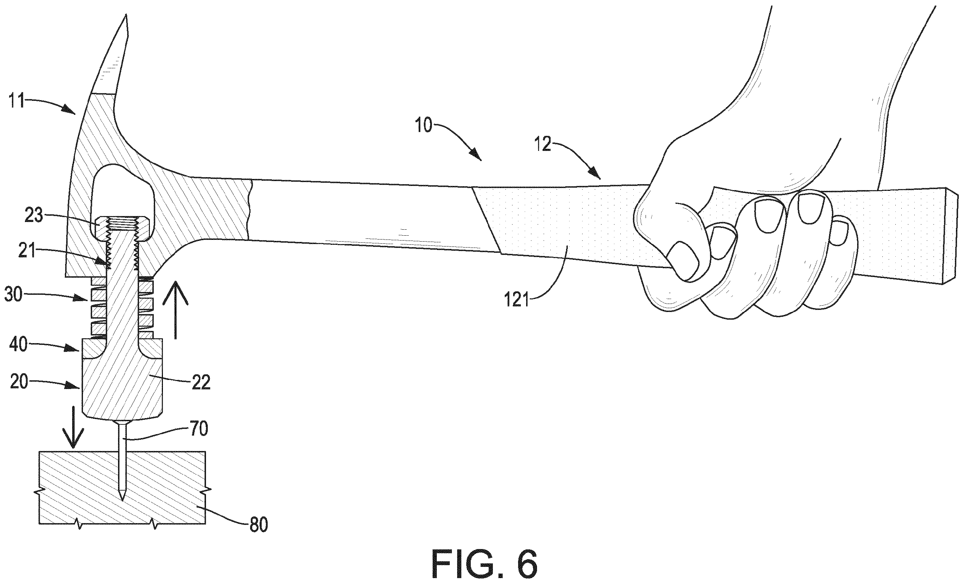

With further reference to Fig. 6, the body 10 will be moved toward the nail 70 with the waving direction of the user (not going to rebound). At this time, the compressed potential energy is released to stretch the elastic element 30, the tapping segment 22 is pushed by the elastic element 30 to move toward the nail 70, and this can increase the contacting time between the tapping segment 22 and the nail 70. The elastic recovery of the elastic element 30 applies an elastic force F3 (a third wave force as shown in Fig. 23) to the nail 70, which can not only increase the contacting time between the tapping segment 22 and the nail 70, but also allow the force-limiting and damping device to return to an initial position (original height) by the elastic force F3, and no external force is needed to lift the force-limiting and damping device, which is relatively labor-saving and convenient in use. In addition, in Fig. 23, a tapping force B1 (a fourth wave force as shown in Fig. 23) is tested by the percussion test machine after the elastic force F3, the tapping force B1 is generated by the continuous downward inertial force of the percussion test machine driving the force-limiting and damping device to move downward during the single tapping process, and is not generated by the force-limiting and damping device. Therefore, in use, when a user holds and taps the force-limiting and damping device, there is no tapping force B1 as measured on the percussion test machine.

Furthermore, according to the data in Fig. 25 (conventional industrial hammer) and Fig. 23 (force-limiting and damping device of the present invention), at the same tapping speed, the impact force F1 of the conventional industrial hammer is quite large. As long as the nail penetrates into the wooden board, it is enough as long as the appropriate force is used. If the force is too large, there will be too much reaction force, which will cause hand injury to the user. Using the conventional industrial hammer not only will generate a large reaction force during the tapping process, but also the user's hands will be easily injured, and the large impact force F1 of the conventional industrial hammer will also bounce during the tapping process, thereby reducing the contacting time with the nail 70. The energy transmission cannot be effectively carried out, and the action of a single impact force F1 cannot allow the conventional industrial hammer to return to the initial position (original height) after being tapped. Therefore, after using the conventional industrial hammer, the user still needs to apply additional force to raise the conventional industrial hammer to prepare for subsequent tapping, which is relatively laborious and inconvenient to use.

In contrast to the force-limiting and damping device of the present invention, at the same tapping speed, the impact force F1 of the force-limiting and damping device of the present invention is about half of the impact force F1 of the conventional industrial hammer. Then the impact force F1 of the force-limiting and damping device of the present invention not only can avoid a large reaction force, effectively reduce the reaction force on the user's hand, and the small impact force F1 will also avoid bouncing during the tapping process, and at the same time cooperating with the strain force F2, and greatly increase the contacting time of the tapping segment 22 and the nail 70. With reference to Figs. 23 and 25, the force action time of the force-limiting and damping device of the present invention is obviously longer than that of the conventional industrial hammer, thereby effectively carrying out energy transmission. The integral of force and time, that is, the accumulation of energy, of the force-limiting and damping device of the present invention, is obviously higher than that of the conventional industrial hammer. It also can be found that, in a depth experiment of the tapping nail 70 into the wooden board 80 under the same tapping speed, the depth of the nail 70 tapped by the force-limiting and damping device of the present invention is more than 30% deeper than that of the conventional industrial hammer, and it can also be proved that the effectiveness of the force-limiting and damping device of the present invention is higher than that of the conventional industrial hammer.

Furthermore, the separate structural arrangement of the body 10, the tapping element 20, the elastic element 30, and the reinforcing element 40 of the force-limiting and damping device of the present invention is less likely to transmit lateral vibration force, thus reducing the vibration of the holding segment 12 more effectively, and this can provide a preferred shock absorption effect. In the tapping process, it also has the effect of shock absorption and buffering and protecting the overall structure of the present invention from the instant impact of the tapping force, and this can increase the structural strength of the force-limiting and damping device of the present invention. In addition, during the tapping process of the force-limiting and damping device of the present invention, the impact force F1, the strain force F2, and the elastic force F3 are applied to the nail 70 in sequence, compared with the single impact force F1 of the conventional industrial hammer to the nail 70 during the tapping process, the force-limiting and damping device of the present invention can tap the nail 70 into the wooden board 80 stably and quickly via the energy accumulation of the three forces (impact force F1+strain force F2+elastic force F3). Therefore, the force-limiting and damping device of the present invention can effectively reduce the number and time of tapping, can effectively avoid bouncing and prevent the user from feeling uncomfortable or getting injured due to the reaction force, and the elastic force F3 can be used to move the force-limiting and damping device of the present invention to return to the initial position (original height) after tapping, which saves the height potential energy. Then the user does not need to apply additional force to carry out the subsequent tapping operation, which is relatively labor-saving and convenient in use. The force-limiting and damping device of the present invention is labor-saving, provides effect of shock-absorbing, and can be returned to the initial position after tapping, which is superior to the performance of the conventional industrial hammer.

According to the above-mentioned structural relationship and features of the force-limiting and damping device in accordance with the present invention, the elastic element 30 between the connecting segment 11 and the tapping segment 22 may provide a damping and delayed rebound effect to the reaction force, increase the contacting time of the tapping segment 22 and the nail 70 to prevent the nail 70 from bending or deflecting easily, reduce noise and the loss of energy, reduce the number and time of tapping the nail 70, reduce the uncomfortable feel of the user, and enable the user to hold the body 10 firmly to tap. The structure of the force-limiting and damping device is simplified, and the elastic tension of the elastic element 30 can be adjusted by replacing the elastic element 30 with different elastic forces or rotating the fixing segment 23. Then, the force-limiting and damping device may provide a damping effect to a user, may provide a high stability in use, and may be easily adjusted. Furthermore, by arranging the reinforcing element 40 between the elastic element 30 and the tapping segment 22, and forming the protrusion segment 24 between the mounting segment 21 and the tapping segment 22, the present invention can prevent the elastic force generated by the elastic element 30 to concentrate stress on the connecting portion between the mounting segment 21 and the tapping segment 22 from damaging and fracturing. Additionally, the structural relationship of the inner diameter of the elastic element 30 matching with the outer diameter of the mounting segment 21 can provide a guiding and supporting effect to the mounting segment 21, and can avoid a deflection phenomenon in the tapping process. Consequently, the force-limiting and damping device of the present invention can improve structural strength, can prolong service life, and can avoid deflection during a tapping process.

Wherein, in order to allow the elastic element 30 between the connecting segment 11 and the reinforcing element 40 to be smoothly attached to the abutting face 114 of the connecting segment 11 and the top side of the reinforcing element 40, the top end and the bottom end of the elastic element 30 are flattened during manufacture, so as to be able to abut against the abutting face 114 and the top side of the reinforcing element 40 smoothly. Furthermore, the elastic element 30 needs to be compressed and clamped during the flattening process, as shown in Fig. 3, gaps G1 and G2 at the top end and the bottom end of the elastic element 30 are smaller than a gap G at the remaining portion of the elastic element 30. When the elastic element 30 of the force-limiting and damping device is compressed by an external force in use, the top end and the bottom end of the elastic element 30 will firstly abut against the remaining portion of the elastic element 30 due to the smaller gaps G1 and G2, resulting in stress concentration.

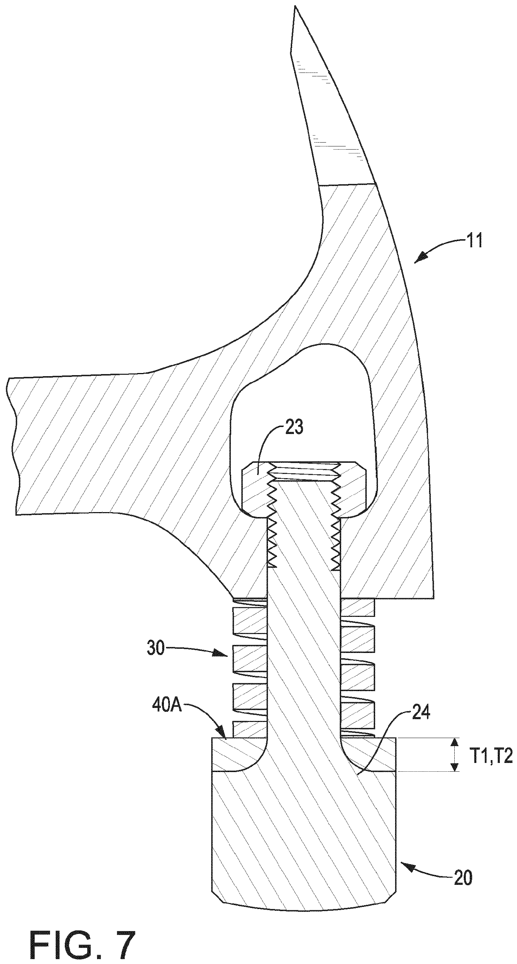

With reference to Fig. 7, a second embodiment of a force-limiting and damping device in accordance with the present invention is substantially the same as the first embodiment except for the following features. In the second embodiment of the present invention, the thickness T2 of the reinforcing element 40A is same as the thickness T1 of the protrusion segment 24 (i.e. T2= T1). Then the bottom end of the elastic element 30 abuts against the reinforcing element 40A and the protrusion segment 24 at the same time. During a tapping process, the elastic force of the elastic element 30 is transmitted to the reinforcing element 40A and the protrusion segment 24 to avoid directly transmitting to the connecting portion between the mounting segment 21 and the tapping segment 22.

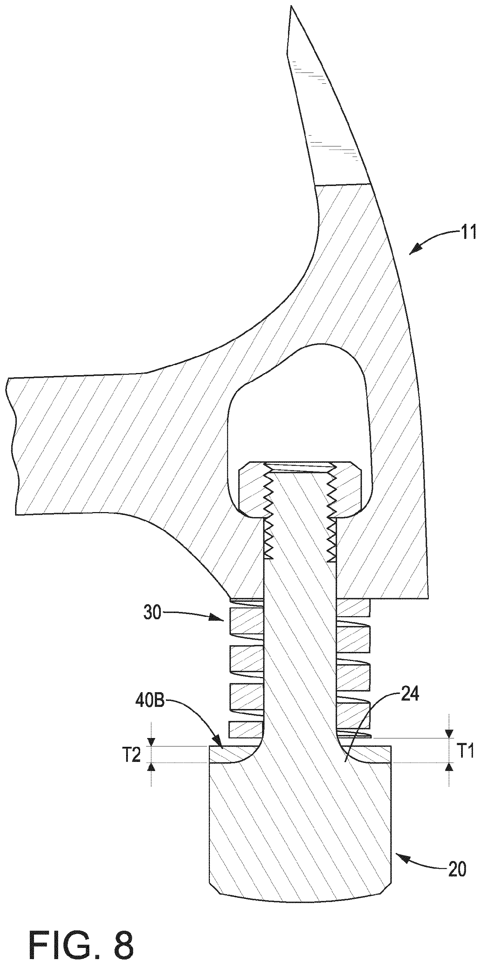

With reference to Fig. 8, a third embodiment of a force-limiting and damping device in accordance with the present invention is substantially the same as the first embodiment except for the following features. In the third embodiment of the present invention, the thickness T2 of the reinforcing element 40B is smaller than the thickness T1 of the protrusion segment 24 (i.e. T2< = T1). Then the bottom end of the elastic element 30 abuts against the protrusion segment 24. During a tapping process, the elastic force of the elastic element 30 is firstly transmitted to the protrusion segment 24 and then to the reinforcing element 40A to avoid directly transmitting to the connecting portion between the mounting segment 21 and the tapping segment 22.

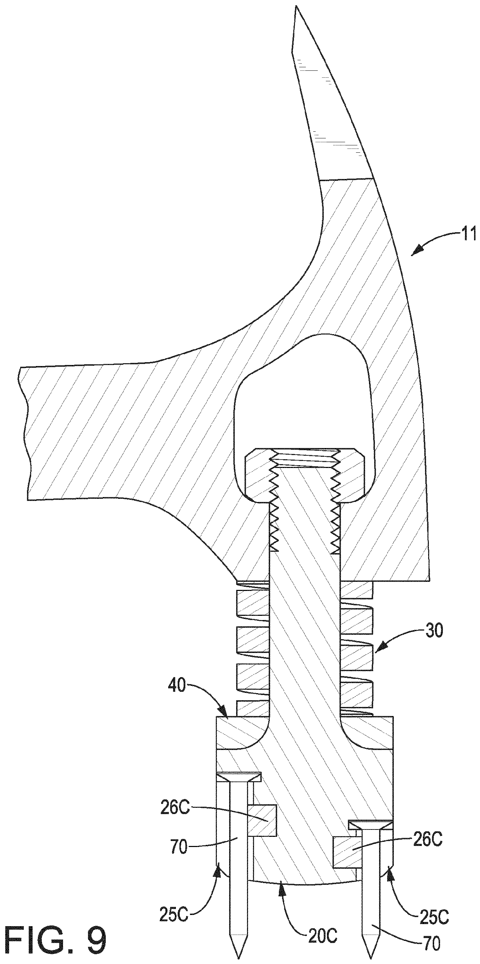

With reference to Fig. 9, a fourth embodiment of a force-limiting and damping device in accordance with the present invention is substantially the same as the first embodiment except for the following features. In the fourth embodiment of the present invention, the tapping element 20C has at least one holding recess 25C and at least one magnetic member 26C. Each one of the at least one holding recess 25C is axially formed in an external surface of the tapping segment of the tapping element 20C for holding a nail 70 on the external surface of the tapping segment of the tapping element 20C. The at least one magnetic member 26C of the tapping element 20C is mounted in an inner side of each one of the at least one holding recess 25C for magnetically attracting the nail 70 securely on the holding recess 25C without holding the nail 70 by hands, and this may prevent the user from getting injured when holding the nail 7 by hands and can be used conveniently without being limited by the position where the nail 70 is to be set.

Preferably, the tapping element 20C has multiple holding recesses 25C, each one of the multiple holding recesses 25C has a length along the axial direction of the tapping segment, and the lengths of the multiple holding recesses 25C are different, and this enables the tapping element 20C to hold nails 70 of different lengths. In addition, the user can rotate the tapping segment relative to the body according to a preset position of the nail 70 to adjust the direction of each one of the holding recesses 25C relative to the body, and the nail 70 in each one of the holding recesses 25C can be disposed in different directions relative to the body. Then the user can dispose the nail 70 in each one of the holding recesses 25C to the preset position.

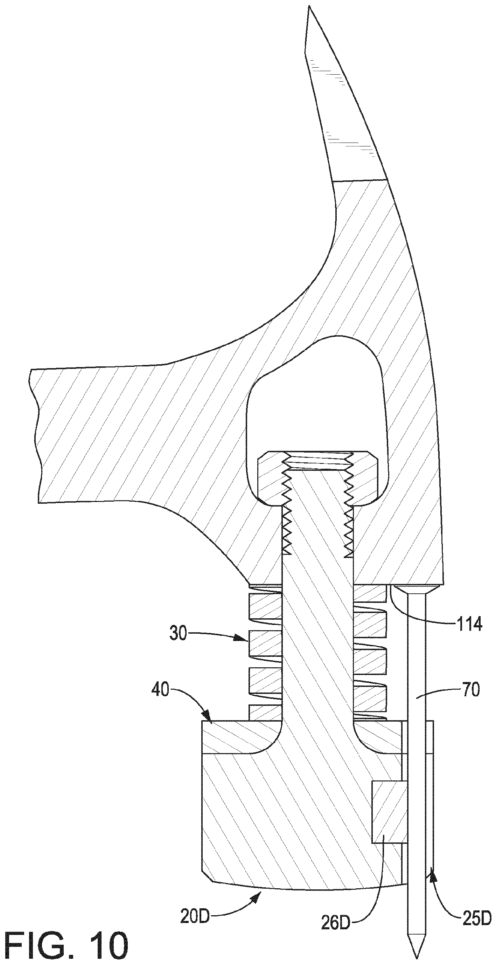

With reference to Fig. 10, a fifth embodiment of a force-limiting and damping device in accordance with the present invention is substantially the same as the fourth embodiment except for the following features. In the fifth embodiment of the present invention, the at least one holding recess 25D is formed through a top side and a bottom side of the tapping segment of the tapping element 20D, and a head of the nail 70 abuts against the abutting face 114 via the at least one holding recess 25D after attracted by the magnetic member 26D. Then the nail 70 can be tapped into an object steadily with the movement of the tapping element 20D.

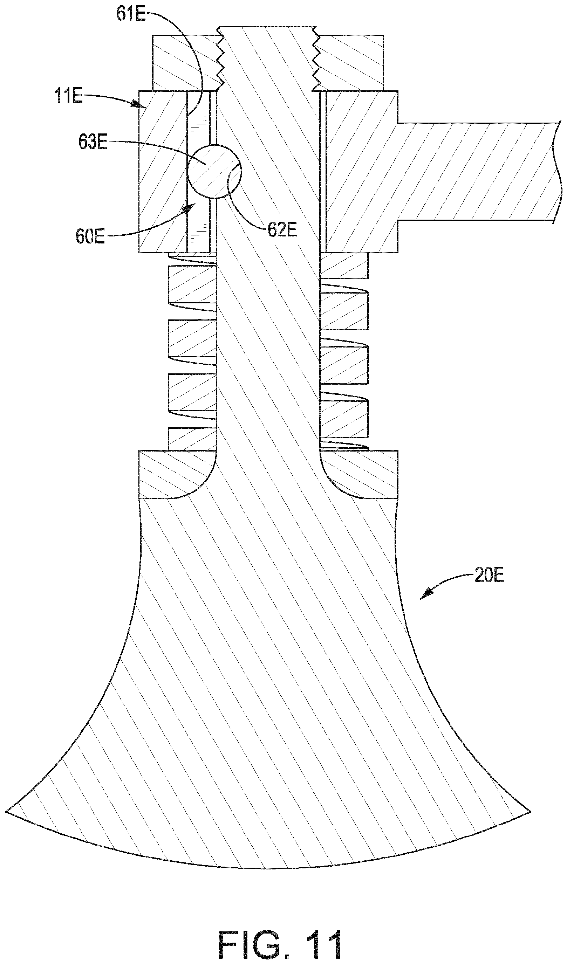

With reference to Fig. 11, a sixth embodiment of a force-limiting and damping device in accordance with the present invention is substantially the same as the first embodiment except for the following features. In the sixth embodiment of the present invention, the force-limiting and damping device has a limiting structure 60E, and the limiting structure 60E has a mounting recess 61E, a limiting recess 62E, and a limiting element 63E. The mounting recess 61E is axially formed through the top side and the bottom side of the connecting segment 11E and communicates with the mounting hole. The limiting recess 62E is formed in an external surface of the mounting segment and communicates with the mounting hole. The limiting element 63E is mounted between the mounting recess 61E and the limiting recess 62E to prevent the tapping element 20E from rotating relative to the body. In addition, the tapping element 20E is an axe blade.

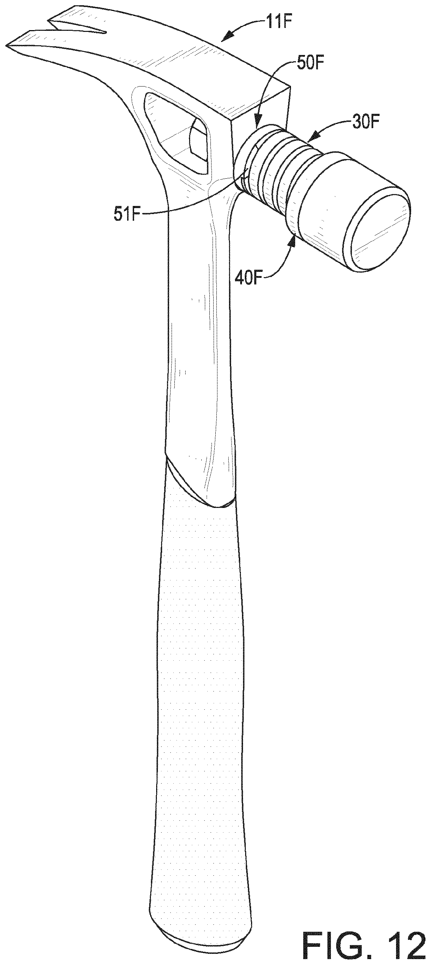

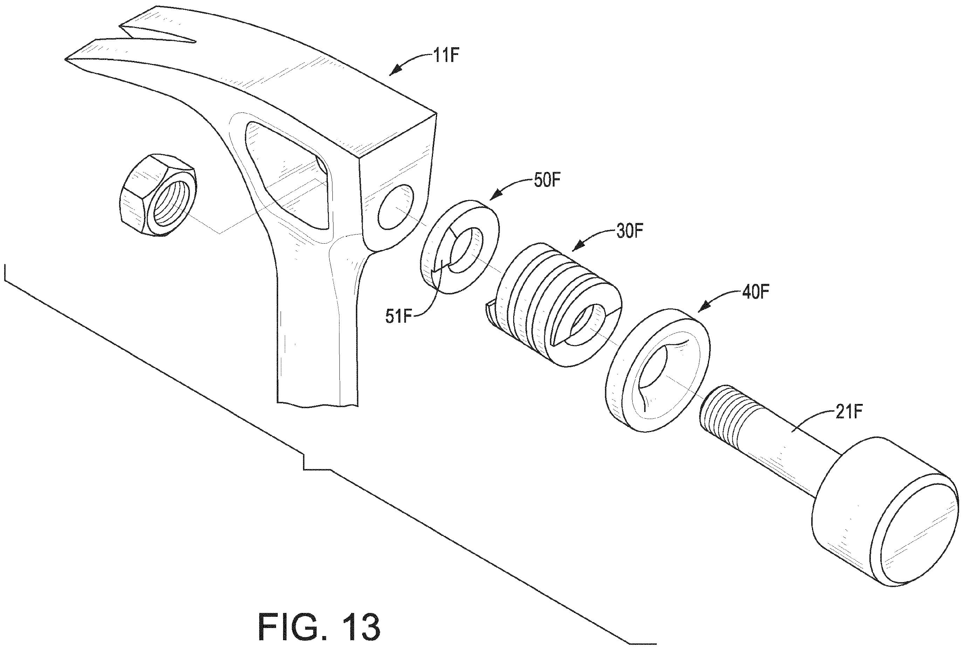

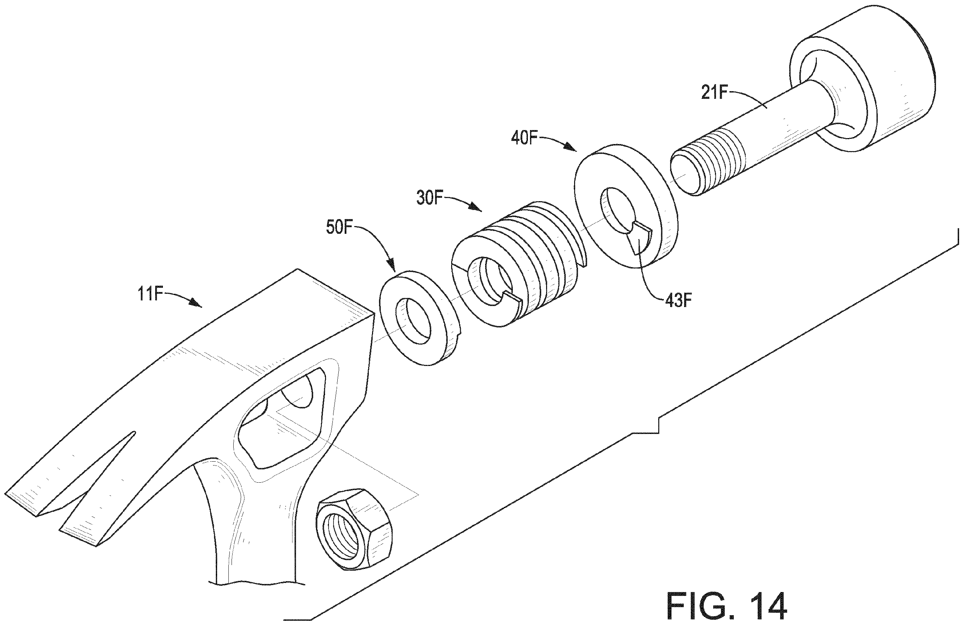

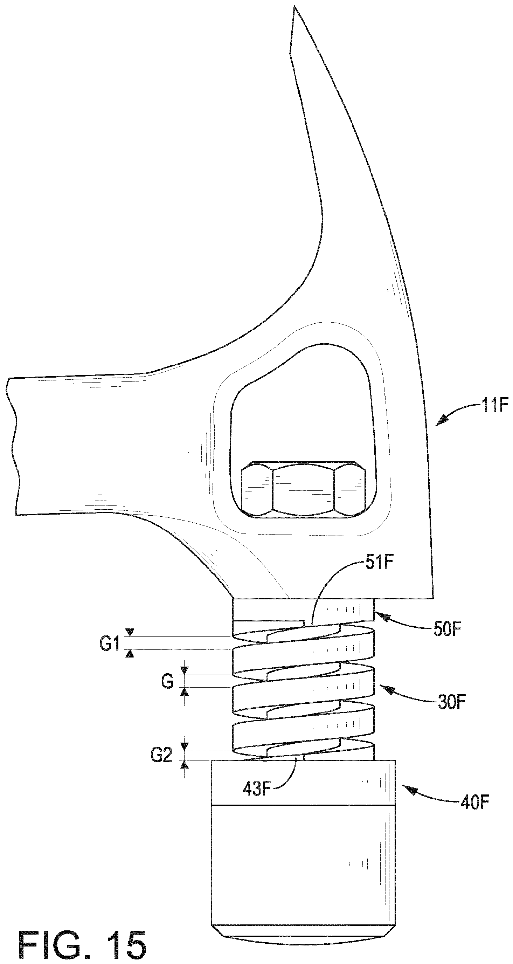

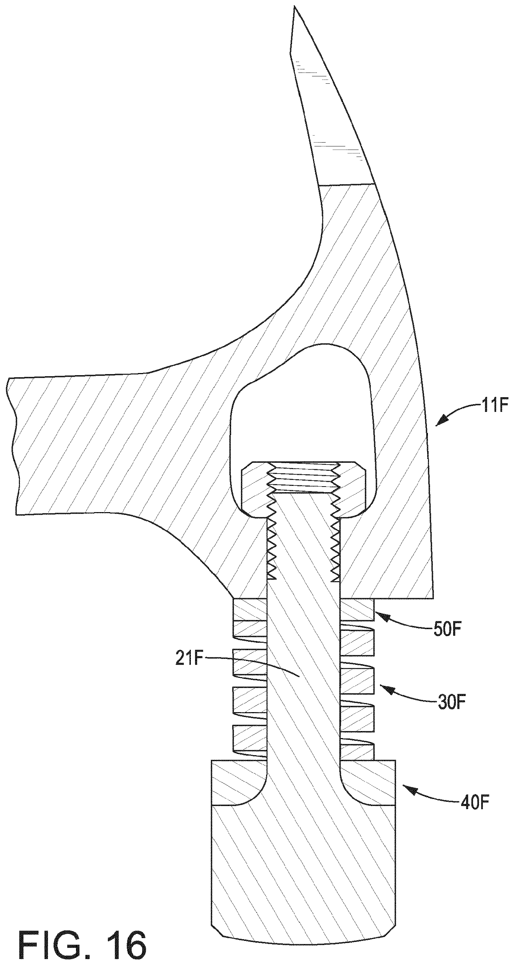

With reference to Figs. 12 to 16, a seventh embodiment of a force-limiting and damping device in accordance with the present invention is substantially the same as the first embodiment except for the following features. In the first embodiment of the present invention, since the gaps G1, G2 on the top end and the bottom end of the elastic element 30 are smaller than the gap G, in use, the top end and the bottom end of the elastic element 30 will produce stress concentration. In the seventh embodiment of the present invention, lengths at the top end and the bottom end of the elastic element 30F have been cut to make the gaps G1, G2 at the top end and the bottom end same in size as the gap G1 (i.e. G1=G2=G). Furthermore, in order to allow the elastic element 30F to be smoothly arranged between the reinforcing element 40F and the connecting segment 11F after being cut in length, the force-limiting and damping device has an auxiliary element 50F, the auxiliary element 50F is mounted around the mounting segment 21F between the connecting segment 11F and the elastic element 30F and has a wedge 51F. The wedge S1F is formed on and protruded from a side of the auxiliary element 50F facing the elastic element 30F to abut the top end of the elastic element 30F. In addition, the reinforcing element 40F has a wedge 43F formed on and protruded from the top side of the reinforcing element 40F and abutting the bottom end of the elastic element 30F. Then the elastic element 30F can be disposed steadily without deflecting between the auxiliary element 50F and the reinforcing element 40F by the two wedges S1F, 43F respectively abutting the top end and the bottom end of the elastic element 30F.

When the seventh embodiment of the force-limiting and damping device of the present invention is in use, since the gaps G1, G2, G of the elastic element 30F are the same in size, during a compression process of the elastic element 30F, all parts of the elastic element 30F bear the same stress without stress concentration, and this prolongs the service life of the elastic element 30F. Furthermore, the length-reduced elastic element 30F can be stably arranged between the reinforcing element 40F and the auxiliary element 50F by the two wedges 43F, 51F respectively abutting the bottom end and the top end of the elastic element 30F, and this can provide a guiding and supporting effect to the mounting segment 21F.

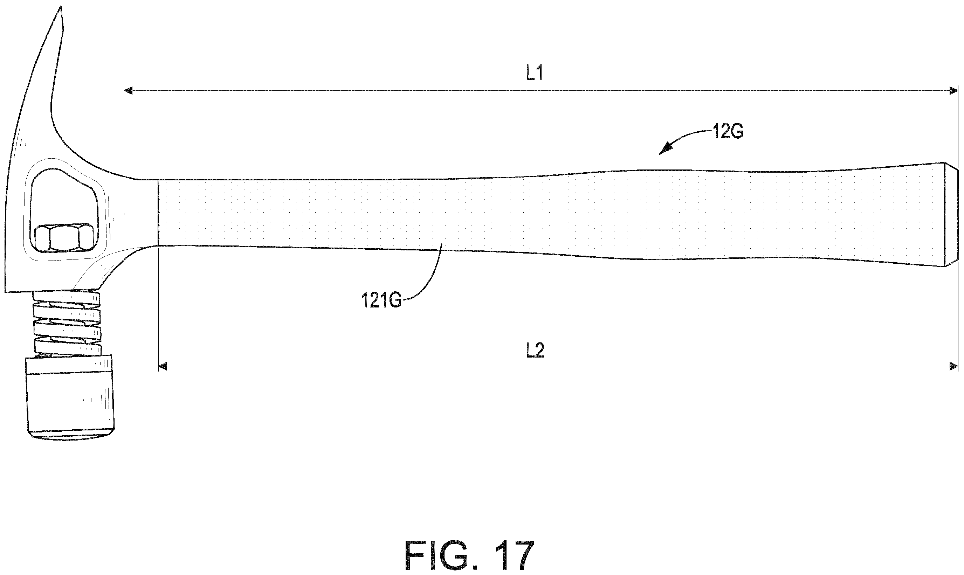

With reference to Fig. 17, an eighth embodiment of a force-limiting and damping device in accordance with the present invention is substantially the same as the first embodiment except for the following features. In the eighth embodiment of the present invention, the holding segment 12G has a length L1, the shock-absorbing element 121G has a length L2, and the length L2 of the shock-absorbing 121G is larger than one-half of the length L1 of the holding segment 12G, and less than or equal to the length L1 of the holding segment 12G (i.e. 1/2L1<L2≦L1), and this increases a range in which a user can hold the holding segment 12G for tapping.

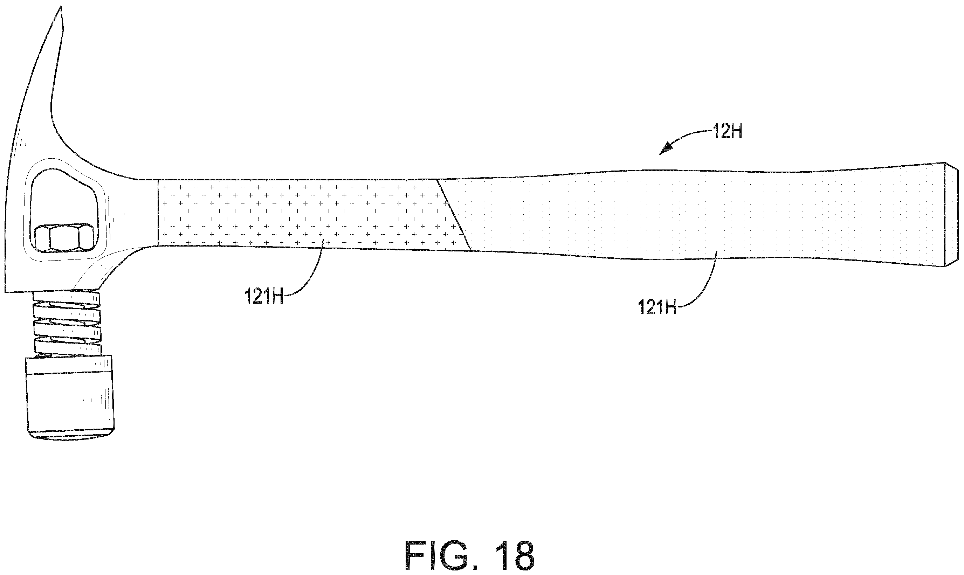

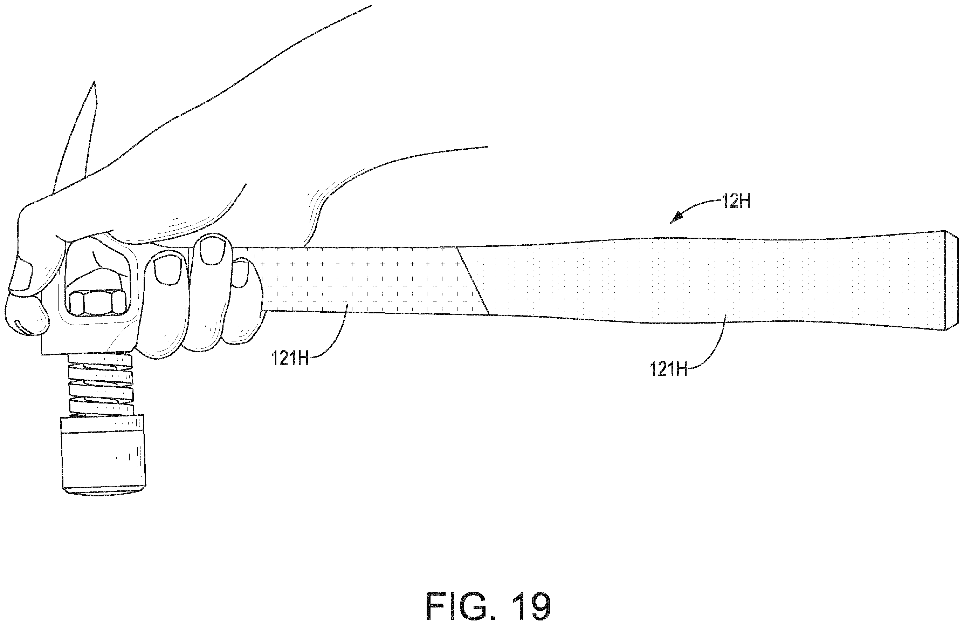

With reference to Fig. 18, a ninth embodiment of a force-limiting and damping device in accordance with the present invention is substantially the same as the eighth embodiment except for the following features. In the ninth embodiment of the present invention, the holding segment 12H has multiple shock-absorbing elements 121H, and the multiple shock-absorbing elements 121H are mounted on the holding segment 12H and may be made of different materials. With reference to Fig. 19, when the ninth embodiment of the present invention is in use, a user can hold the holding segment 12H at different positions with the different shock-absorbing elements 121H according to the user's need. Then a shock-absorbing effect can be provided by the multiple shock-absorbing elements 121H on the holding segment 12H during a tapping process of the force-limiting and damping device of the present invention.

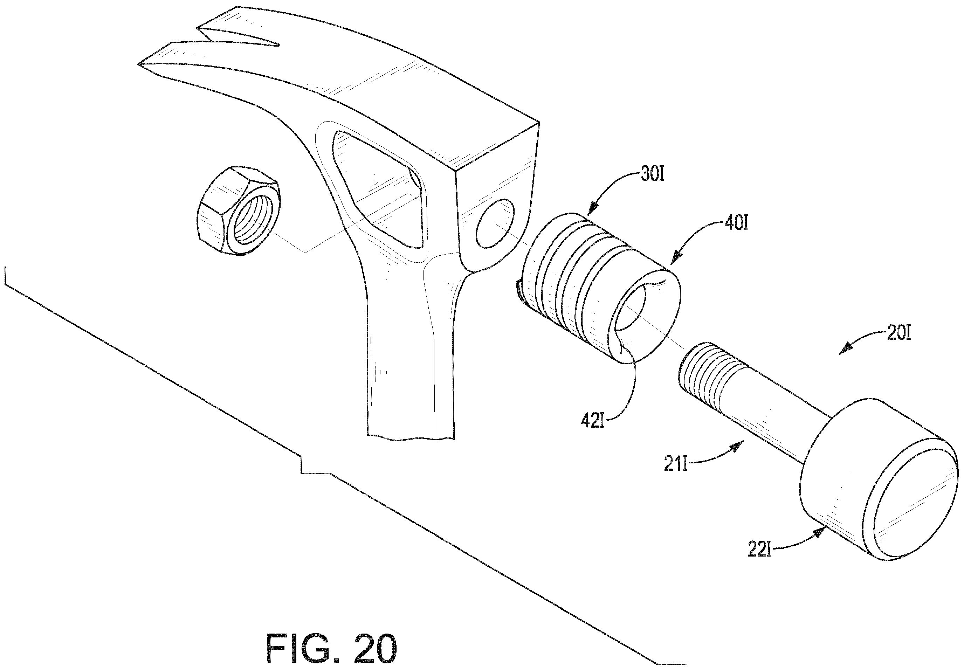

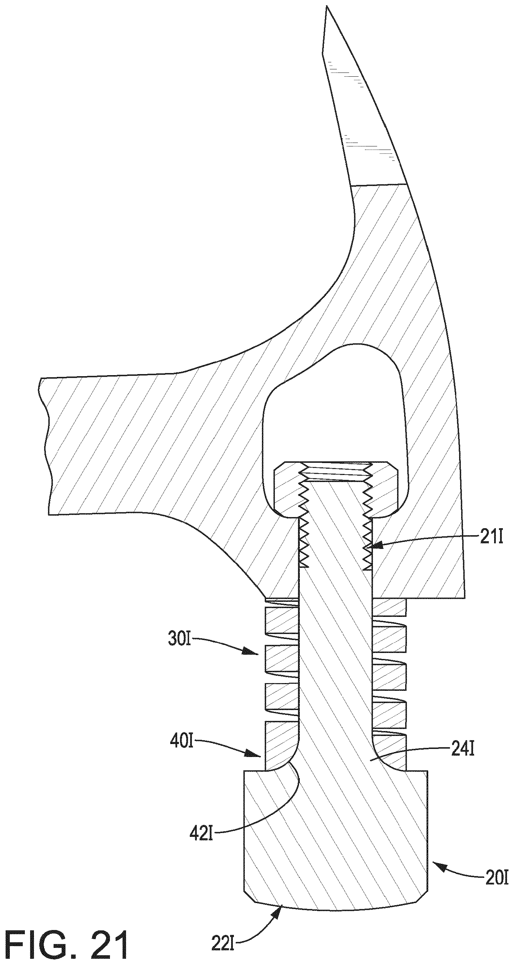

With reference to Figs. 20 and 21, a tenth embodiment of a force-limiting and damping device in accordance with the present invention is substantially the same as the first embodiment except for the following features. In the tenth embodiment of the present invention, the elastic element 301 and the reinforcing element 401 are formed as a single piece, the reinforcing element 40I may be formed on the bottom end of the elastic element 30I or may be processed on the bottom end of the elastic element 30I. In use, an abutment between the contacting face 42I of the reinforcing element 40I at the bottom end of the elastic element 30I and the protrusion segment 24I of the tapping element 20I can absorb and disperse the stress concentrated on the connecting portion between the mounting segment 21I and the tapping segment 22I and can avoid breaking or damaging the connecting portion after long-term use.

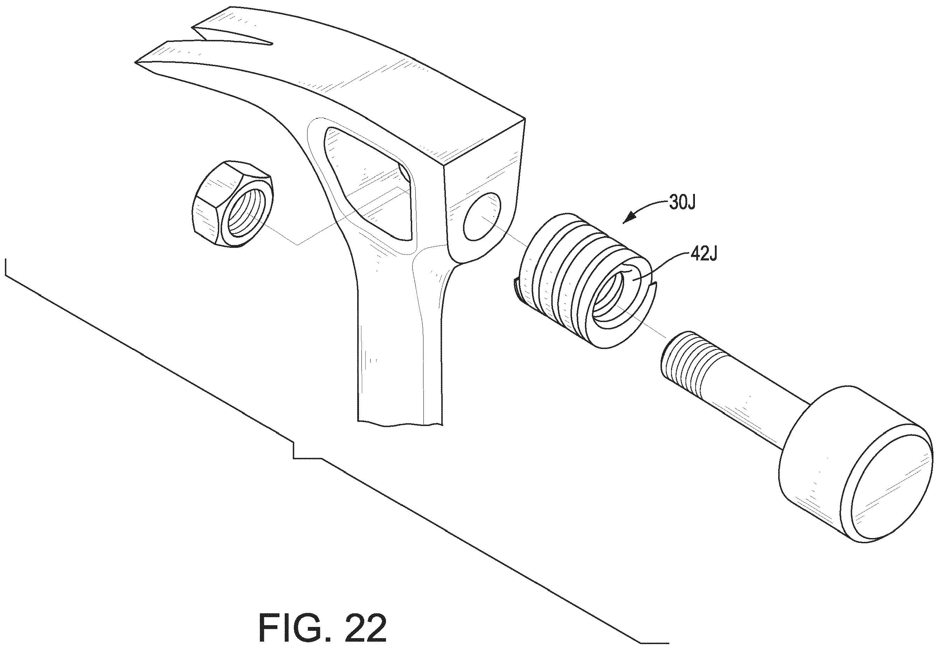

With reference to Fig. 22, an eleventh embodiment of a force-limiting and damping device in accordance with the present invention is substantially the same as the tenth embodiment except for the following features. In the eleventh embodiment of the present invention, the contacting face 42J is directly formed on the bottom end of the elastic element 30J.

According to the above-mentioned structural relationships and the features, the elastic element 30, 30F, 30I, 30J is mounted between the connecting segment 11, 11E, 11F of the body 10 and the tapping segment 22, 22I of the tapping element 20, 20C, 20D, 20E, 20I. Then the user may be reminded of the tapping force by observing the compression extent of the elastic element 30, 30F, 30I, 30J, and this may provide a force-limiting effect to the user. In addition, the force-limiting and damping device may provide a delayed rebound and damping effect to the reaction force that is generated when the tapping segment 22, 22I is tapped on a nail 70 and this may increase the contacting time between the tapping segment 22, 22I and the nail 70 to prevent the nail 70 from bending or deflecting, and reduce noise and the loss of energy. Furthermore, the number and time of tapping the nail 70 can be reduced relatively, and the user may hold the body 10 securely to tap. Additionally, the force-limiting and damping device is simplified and may provide different elastic tensions of the elastic element 30, 30F, 30I, 30J by replacing the elastic element 30, 30F, 30I, 30J with different elastic forces or by rotating the fixing segment 23. Therefore, the force-limiting and damping device of the present invention may provide a reminder effect to a user, may improve feel of vibration, and may adjust the force range according to the user's need.

In addition, the reinforcing element 40, 40A, 40B, 40F, 40I is mounted between the elastic element 30, 30F, 30I, 30J and the tapping segment 22, 22I, and the protrusion segment 24, 24I is formed between the mounting segment 21, 21F, 21I and the tapping segment 22, 22I, and this can avoid stress concentrating on the connecting portion from breaking and damaging the connecting portion during a tapping process. Furthermore, the inner diameter of the elastic element 30, 30F, 30I, 30J matches with the outer diameter of the mounting segment 21, 21F, 21I, and this can provide a guiding and supporting effect to the mounting segment 21, 21F, 21I by the elastic element 30, 30F, 30I, 30J. The force-limiting and damping device of the present invention can improve structural strength, can prolong service life, and can avoid deflection during a tapping process.

## Claims

1. A force-limiting and damping device, **characterized in that** the force-limiting and damping device comprises:
a body (10) having
a front end;
a rear end;
a connecting segment (11, 11E, 11F) formed on and protruded from the front end of the body (10) and having a mounting hole (111); and
a holding segment (12, 12G, 12H) formed on the rear end of the body (10) and being opposite the connecting segment (11, 11F, 11F);
a tapping element (20, 20C, 20D, 20E, 20I) movably connected to the body (10) relative to the connecting segment (11, 11F, 11F), and having
a mounting segment (21, 21F, 21I) movably connected to the mounting hole (111) of the connecting segment (11, 11F, 11F);
a tapping segment (22, 22I) disposed on an end of the mounting segment (21, 21F, 21I) and mounted below the connecting segment (11, 11E, 11F);
a fixing segment (23) connected to the mounting segment (21, 21F, 21I) and abutting the connecting segment (11, 11E, 11F); and
a protrusion segment (24, 24I) formed on a connecting portion between the mounting segment (21, 21F, 21I) and the tapping segment (22, 22I);
an elastic element (30, 30F, 30I, 30J) mounted on the mounting segment (21, 21F, 211) of the tapping element (20, 20C, 20D, 20E, 20I) between the connecting segment (11, 11E, 11F) of the body (10) and the tapping segment (22, 22I) of the tapping element (20, 20C, 20D, 20E, 20I), being adapted to remind a user whether a tapping force exceeds a set force range of the force-limiting and damping device when tapping; and
a reinforcing element (40, 40A, 40B, 40F, 40I) disposed on the tapping element (20, 20C, 20D, 20E, 20I) between the elastic element (30, 30F, 30I, 30J) and the tapping segment (22, 22I) of the tapping element (20, 20C, 20D, 20E, 20I), and abutting against the protrusion segment (24, 24I);
wherein the reinforcing element (40, 40A, 40B, 40F, 40I) is mounted between the elastic element (30, 30F, 30I, 30J) and the tapping segment (22, 22I), and the protrusion segment (24, 24I) is formed between the mounting segment (21, 21F, 21I) and the tapping segment (22, 22I) to abut against the reinforcing element (40, 40A, 40B, 40F, 40I) to avoid stress from concentrating on, breaking and damaging the connecting portion during a tapping process.

2. The force-limiting and damping device as claimed in claim 1, wherein the reinforcing element (40I) is formed with the elastic element (30I) as a single piece.

3. The force-limiting and damping device as claimed in claim 2, wherein the reinforcing element (40, 40A, 40B, 40F, 40I) is an annular structure.

4. The force-limiting and damping device as claimed in claim 2, wherein the reinforcing element (40, 40A, 40B, 40F, 40I) is a plurality of protruding structures annularly arranged at spaced intervals.

5. The force-limiting and damping device as claimed in any one of claims 1 to 4, wherein the reinforcing element (40) has a thickness (T2) being larger than a thickness (T1) of the protrusion segment (24).

6. The force-limiting and damping device as claimed in any one of claims 1 to 4, wherein the reinforcing element (40A) has a thickness (T2) being same as a thickness (T1) of the protrusion segment (24).

7. The force-limiting and damping device as claimed in any one of claims 1 to 4, wherein the reinforcing element (40B) has a thickness (T2) being smaller than a thickness (T1) of the protrusion segment (24).

8. The force-limiting and damping device as claimed in any one of claims 1 to 4, wherein the protrusion segment (24, 24I) has a curved surface facing the connecting segment (11);
and
the reinforcing element (40, 40I) has a contacting face (42, 42I) formed on a bottom side of the reinforcing element (40, 40I) facing the tapping segment (22, 22I) and fully contacted with the curved surface of the protrusion segment (24, 241).

9. The force-limiting and damping device as claimed in any one of claims 1 to 4, wherein
the protrusion segment (24, 24I) has a curved surface facing the connecting segment (11);
and
the reinforcing element (40, 40I) has a contacting face (42, 42I) formed on a bottom side of the reinforcing element (40, 40I) facing the tapping segment (22, 22I) and partially contacted with the curved surface of the protrusion segment (24, 24I).

10. The force-limiting and damping device as claimed in any one of claims 1 to 4, wherein
the connecting segment (11, 11E, 11F) has a receiving space (112) formed through two opposite sides of the connecting segment (11, 11E, 11F) and communicating with the mounting hole (111); and
the fixing segment (23) is disposed in the receiving space (112), is connected to the mounting segment (21, 21F, 21I), and abuts the connecting segment (11, 11E, 11F) of the body (10).

11. The force-limiting and damping device as claimed in any one of claims 1 to 4, wherein
the connecting segment (11, 11E, 11F) has an abutting face (114) formed on a bottom side of the connecting segment (11, 11F, 11F); and
the elastic element (30, 30F, 30I, 30J) has a top end abutting against the abutting face (114) of the connecting segment (11, 11E, 11F).

12. The force-limiting and damping device as claimed in claim 11, wherein the tapping element (20C, 20D) has at least one holding recess (25C, 25D) axially formed in an external surface of the tapping segment (22) of the tapping element (20C, 20D) for holding a nail (70) on the external surface of the tapping segment (22) of the tapping element (20C, 20D).

13. The force-limiting and damping device as claimed in claim 12, wherein the tapping element (20C, 20D) has a magnetic member (26C, 26D) disposed in an inner side of each one of the at least one holding recess (25C, 25D) for magnetically attracting the nail (70) securely on the holding recess (25C, 25D).

14. The force-limiting and damping device as claimed in claim 12, wherein the at least one holding recess (25D) is formed through a top side and a bottom side of the tapping segment (22) of the tapping element (20D) for a head of the nail (70) to abut against the abutting face (114) via the at least holding recess (25D).

15. The force-limiting and damping device as claimed in any one of claims 1 to 4, wherein
the force-limiting and damping device has a limiting structure (60E); and
the limiting structure (60E) has
a mounting recess (61E) axially formed through a top side and a bottom side of the connecting segment (11E) and communicating with the mounting hole (111);
a limiting recess (62E) formed in an external surface of the mounting segment (21) and communicating with the mounting hole (111); and
a limiting element (63E) mounted between the mounting recess (61E) and the limiting recess (62E) to prevent the tapping element (20E) from rotating relative to the body (10).

16. The force-limiting and damping device as claimed in claim 15, wherein the tapping segment (22) of the tapping element (20E) is an axe blade.

17. The force-limiting and damping device as claimed in claim 1, wherein
the elastic element (30F) has a gap (G1) at a top end of the elastic element (30F), a gap (G2) at a bottom end of the elastic element (30F), and gaps (G) at remaining portions of the elastic element (30F);
the gaps (G1, G2, G) at the top end, the bottom end, and the remaining portions of the elastic element (30F) are the same in size;
the force-limiting and damping device has an auxiliary element (50F) mounted around the mounting segment (21F) between the connecting segment (11F) and the elastic element (30F) and having a wedge (51F) formed on and protruded from a side of the auxiliary element (50F) facing the elastic element (30F) to abut the top end of the elastic element (30F); and
the reinforcing element (40F) has a wedge (43F) formed on and protruded from a top side of the reinforcing element (40F) and abutting the bottom end of the elastic element (30F).

18. The force-limiting and damping device as claimed in any one of claims 1 to 4, wherein
the holding segment (12, 12G, 12H) has at least one shock-absorbing element (121, 121G, 121H) disposed on an external surface of the holding segment (12, 12G, 12H); and
the at least one shock-absorbing element (121, 121G, 121H) has a length (L2) being larger than one-half of a length (L1) of the holding segment (12, 12G, 12H), and being less than or equal to the length (L1) of the holding segment (12, 12G, 12H).

19. The force-limiting and damping device as claimed in claim 18, wherein the holding segment (12H) has multiple shock-absorbing elements (121H) mounted on the holding segment (12H) and made of different materials.
